# EUROPÄISCHE PATENTANMELDUNG

(11) **EP 2 163 829 A2**
(43) Veröffentlichungstag der Anmeldung: **17.03.2010**
(21) Anmeldenummer: 09450163.2
(22) Anmeldetag: 10.09.2009
(51) Int. Cl.: F24D 3/18

(54) **Vorrichtung zur Nutzung der Abwärme insbesondere häuslicher Abwässer**

(30) Priorität: 11.09.2008 AT 14122008
(71) Anmelder: Hatzl Markus Ing., 5020 Salzburg (AT)
(72) Erfinder: Hatzl Markus Ing., 5020 Salzburg (AT)
(74) Vertreter: Hübscher, Helmut

(57) **Zusammenfassung**

Es wird eine Vorrichtung zur Nutzung der Abwärme insbesondere häuslicher Abwässer mit einem Sammelbehälter (1) für die Abwässer, der über eine bodenseitig angeschlossene, abflussseitig durch ein Steuerventil (7) verschließbare Rohrleitung (6) mit einer Abwasserableitung (4) verbunden ist, und mit einem mit dem Abwasser aus dem Sammelbehälter (1) beaufschlagbaren, aus der wenigstens mit einer Rohrschlange (12) vorzugsweise für das Kältemittel einer Wärmepumpe (13) umwundenen Rohrleitung (6) gebildeten Wärmetauscher (11) beschrieben. Um vorteilhafte Betriebsbedingungen zu schaffen, wird vorgeschlagen, dass das Steuerventil (7) zur chargenweisen Erwärmung des die Rohrschlange (12) durchströmenden Kältemittels in Abhängigkeit von der Abwassertemperatur in der Rohrleitung (6) betätigbar ist.

## Beschreibung

Die Erfindung bezieht sich auf eine Vorrichtung zur Nutzung der Abwärme insbesondere häuslicher Abwässer mit einem Sammelbehälter für die Abwässer, der über eine bodenseitig angeschlossene, abflussseitig durch ein Steuerventil verschließbare Rohrleitung mit einer Abwasserableitung verbunden ist, und mit einem mit dem Abwasser aus dem Sammelbehälter beaufschlagbaren, aus der wenigstens mit einer Rohrschlange vorzugsweise für das Kältemittel einer Wärmepumpe umwundenen Rohrleitung gebildeten Wärmetauscher.

Da häusliche Abwässer mit Fäkalien und anderen Verunreinigungen belastet sind, ergeben sich bei der Nutzung der fühlbaren Abwärme dieser Abwässer Schwierigkeiten im Bereich der Wärmetauscher, weil sich diese Verunreinigungen an den Wärmetauscherflächen anlegen, sodass eine Wartung durch ein Reinigen der Wärmetauscher in vergleichsweise kurzen Wartungsintervallen erforderlich wird. Zu diesem Zweck können mechanische Reinigungseinrichtungen eingesetzt werden (DE 20 2007 006 465 U1), was jedoch den Konstruktionsaufwand erhöht. Um hier Abhilfe zu schaffen, wurde bereits vorgeschlagen (EP 0 058 636 B1), in den Sammelbehälter für die Abwässer einen sich nach unten konisch verjüngenden, nach oben durch ein Grobsieb abgedeckten Hohlkörper einzusetzen, in den die Abwässer eingeleitet werden, sodass die durch das Grobsieb in den Sammelbehälter austretenden Abwässer einer Grobfilterung unterworfen werden. Die im Sammelbehälter vorgesehenen, den Hohlkörper mit radialem Abstand umschließenden Wärmetauscher zur Erwärmung eines Wärmeträgers, über den das Kältemittel einer Wärmepumpe im Wärmeaustausch erwärmt wird, werden zusätzlich durch ein Feinfilter gegenüber den aus dem Grobfilter austretenden Abwässern abgeschirmt, sodass die Belastung dieser Wärmetauscher in Form von schraubenförmigen Rohrschlangen durch die Abwässerverschmutzung vergleichsweise klein bleibt. Zur Reinigung des Grobfilters muss der die Abwässer zunächst aufnehmende Hohlkörper gespült werden, der zu diesem Zweck über eine Anschlussleitung mit einer Abwasserleitung verbunden wird. Die sich im Sammelbehälter sedimentierenden feinkörnigeren Verschmutzungen werden mit den Abwässern über eine bodenseitige Rohrleitung abgeführt, die abflussseitig mit einem Steuerventil versehen ist, das die zu diesem Zweck abflussseitig mit einem Sperrventil versehen ist. Nachteilig bei dieser bekannten Vorrichtung ist allerdings, dass trotz des erheblichen konstruktiven Aufwands die regelmäßige Wartung des Grobfilters durch ein Spülen des Hohlkörpers nicht vermieden werden kann.

Schließlich ist es bekannt (DE 195 06 015 A1), die fühlbare Abwärme von in einem Sammelbehälter gesammelten Abwässern dadurch auszunützen, dass an den Sammelbehälter eine zu einem Abfluss führende Rohrleitung angeschlossen ist, die einen mit einer Rohrschlange für ein Kältemittel umwundenen Wärmetauscher bildet. Wird bei Bedarf eines erwärmten Kältemittels die Rohrschlange über ein Steuerventil geöffnet, so wird aufgrund der beim Durchfluss des Kältemittels auftretenden Druckdifferenz ein Motorschieber in der Rohrleitung geöffnet, sodass Abwasser aus dem Sammelbehälter durch die Rohrleitung zum Abfluss strömt. Nachteilig bei dieser bekannten Vorrichtung ist vor allem, dass die Abwärme des Abwassers nur unvollständig genützt werden kann, selbst dann, wenn die Strömungsgeschwindigkeit des Abwassers in der Rohrleitung durch einen im Vergleich zu üblichen Abwasserrohren geringeren Strömungsquerschnitt gedrosselt wird, was wiederum den Nachteil einer größeren Verstopfungsgefahr mit sich bringt.

Der Erfindung liegt somit die Aufgabe zugrunde, eine Vorrichtung der eingangs geschilderten so auszugestalten, dass mit einfachen konstruktiven Mitteln eine weitgehend wartungsfreie, gute Ausnützung der fühlbaren Abwärme insbesondere der häuslichen Abwässer, aber auch gegebenenfalls von gewerblichen oder industriellen Abwässern sichergestellt werden kann.

Die Erfindung löst die gestellte Aufgabe dadurch, dass das Steuerventil zur chargenweisen Erwärmung des die Rohrschlange durchströmenden Kältemittels in Abhängigkeit von der Abwassertemperatur in der Rohrleitung betätigbar ist.

Da zufolge dieser Maßnahme die eine glatte Innenwandung aufweisende Rohrleitung durch die chargenweise nachfließenden Abwässer ständig gespült wird, ergibt sich im Bereich der Rohrleitung zwischen dem Sammelbehälter und der Abwasserableitung eine wirksame Selbstreinigung. Mit dem Einsatz dieser Rohrleitung als ein die Abwasserführung übernehmender Teil des Wärmetauschers können somit die sonst auftretenden Schwierigkeiten durch die Verschmutzung der die abwässerführenden Konstruktionsteile vermieden werden. Der Wärmetauscher selbst, der sich aus der Rohrleitung zwischen Sammelbehälter und Abwasserableitung und wenigstens einer diese Rohrleitung umwindenden Rohrschlange vorzugsweise für das Kältemittel der Wärmepumpe zusammensetzt, kann in vorteilhafter Weise in Abhängigkeit von der jeweiligen Abwassertemperatur genützt werden, weil das abflussseitige Steuerventil in Abhängigkeit von der Abwassertemperatur in der Rohrleitung betätigt wird, sodass bei geschlossenem Steuerventil das Abwasser in der den Wärmetauscher bildenden Rohrleitung solange gehalten werden kann, bis das Abwasser auf eine vorgebbare Temperatur abgekühlt ist, sodass die fühlbare Abwärme des Abwassers weitgehend für die Erwärmung des Kältemittels genützt werden kann. Wegen der chargenweisen Füllung der Rohrleitung kann diese mit einem an die Abflussleitung angepassten Strömungsquerschnitt ausgebildet werden, was nach dem Öffnen des Steuerventils die vorteilhafte Spülung der Rohrleitung sicherstellt.

Um für die Spülung der den Wärmetauscher bildenden Rohrleitung von der Füllstandshöhe der Abwässer im Sammelbehälter unabhängig zu sein, kann die an den Sammelbehälter angeschlossene Rohrleitung unter einem Gefälle verlegt werden, das die Strömungsausbildung in der Rohrleitung nach dem Öffnen des Steuerventils unterstützt.

Für die Betätigung dieses Steuerventils ist eine tatsächliche Temperaturerfassung im Bereich der abwasserführenden Rohrleitung des Wärmetauschers nicht zwingend erforderlich, wenn von einer üblichen Durchschnittstemperatur ausgegangen wird, sodass das Steuerventil auch über eine Zeitschaltung betätigt werden kann. Eine bessere Wärmeausnützung ergibt sich allerdings, wenn eine an einem Temperaturfühler für das Abwasser in der Rohrleitung angeschlossene Steuereinrichtung vorgesehen ist, die einerseits das Steuerventil der Rohrleitung und anderseits eine Pumpe für den Kältemittelkreis der Wärmepumpe ansteuert. In diesem Fall kann die fühlbare Abwärme der Abwässer im Bereich der Rohrleitung des Wärmetauschers bis zu einem unteren vorgegebenen Grenzwert vorteilhaft genützt werden. Wird diese untere Grenztemperatur unterschritten, so öffnet das abflussseitig der Rohrleitung angeordnete Steuerventil, um die entwärmten Abwässer in die Abwasserleitung abzuführen und die Rohrleitung mit Abwässern aus dem Sammelbehälter nachzufüllen. Der hydrostatische Druck im Sammelbehälter unterstützt dabei den Abfluss der Abwässer aus der Rohrleitung. Aufgrund des gegebenen Rohrleitungsdurchmessers und des Gefälles der Rohrleitung kann unter Berücksichtigung zumindest einer durchschnittlichen Füllstandshöhe im Sammelbehälter die Zeit für den Austausch der Abwässer in der Rohrleitung ausreichend genau vorgegeben werden, um ohne Durchflussmengenmessung das Steuerventil wieder schließen zu können. Eine Durchflussmengenmessung ist aber selbstverständlich für eine genaue Steuerung durchaus möglich. Die jeweilige Füllstandshöhe kann über einen Füllstandsgeber des Sammelbehälters erfasst und bei der Steuerung des Steuerventils berücksichtigt werden. Über einen solchen Füllstandsgeber kann auch beim Erreichen einer unteren Grenze der Füllstandshöhe im Sammelbehälter der Betrieb der an den Wärmetauscher angeschlossenen Wärmepumpe eingestellt werden.

Bei einem größeren Anfall von zu entwärmenden Abwässern, wie dies im gewerblichen oder industriellen Abwasserbereich der Fall sein kann, kann die den Wärmetauscher bildende Rohrleitung auf mehrere parallele Stränge aufgeteilt werden, die jeweils mit einer Rohrleitung für das Kältemittel wenigstens einer Wärmepumpe umwunden sind.

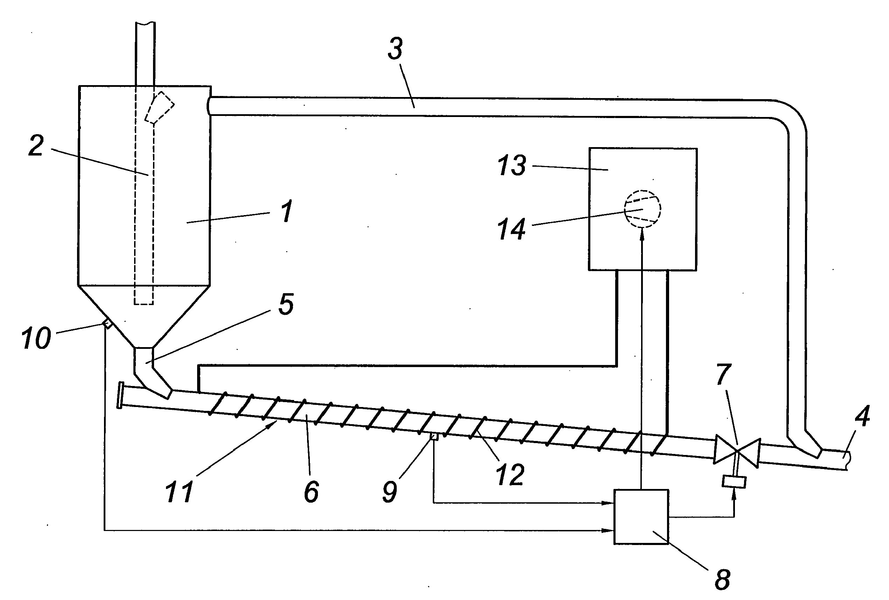

In der Zeichnung ist der Erfindungsgegenstand beispielsweise dargestellt, und zwar wird eine erfindungsgemäße Vorrichtung zur Nutzung der Abwärme zum Beispiel häuslicher Abwässer in einem vereinfachten Blockschaltbild gezeigt.

Die dargestellte Vorrichtung weist einen Sammelbehälter 1 für häusliche Abwässer auf, die über eine Tauchleitung 2 in den Sammelbehälter 1 eingebracht werden. Um eine Überfüllung des Sammelbehälters 1 zu vermeiden, ist eine Überlaufleitung 3 an den Sammelbehälter 1 angeschlossen, die in eine Abwasserableitung 4 mündet. Bodenseitig ist der Sammelbehälter 1 über einen Anschluss 5 mit einer Rohrleitung 6 verbunden, die unter einem vorgegebenen Gefälle zwischen dem Sammelbehälter 1 und der Abwasserableitung 4 verläuft. Abflussseitig der Rohrleitung 6 ist diese mit einem Steuerventil 7 versehen, das über eine Steuereinrichtung 8 angesteuert werden kann. Die Steuereinrichtung 8 ist einerseits mit einem Temperaturfühler 9 der Rohrleitung 6 und anderseits mit einem Füllstandsgeber 10 des Sammelbehälters 1 verbunden.

Zur Nutzung der fühlbaren Abwärme der Abwässer ist ein Wärmetauscher 11 vorgesehen, der die Rohrleitung 6 für die Abwasserführung und eine die Rohrleitung 6 außen umwindende Rohrschlange 12 zum Erwärmen des Kältemittels einer üblichen, nicht näher dargestellten Wärmepumpe 13 umfasst. Der Wärmetauscher 11 kann als Verdampfer für die Wärmepumpe 13 eingesetzt werden, wobei der Verdichter 14 des Kältemittelkreises über die Steuereinrichtung 8 angesteuert werden kann, um die fühlbare Abwärme der Abwässer im Bereich der Rohrleitung 6 bis zu einer vorgegebenen Restwärme nützen zu können. Ist die untere Grenztemperatur erreicht, so spricht der Temperaturfühler 9 an, was ein Öffnen des Steuerventils 7 zur Folge hat, um das entwärmte Abwasser aus der Rohrleitung 6 abzuführen und Abwasser aus dem Sammelbehälter 1 nachzufüllen. Mit dem Schließen des Steuerventils 7 wird der beschriebene Vorgang zur Wärmenutzung der Abwässer aus dem Sammelbehälter 1 wiederholt. Da die Rohrleitung 6 ein Mindestvolumen an Abwässern aufnehmen soll, ist bei einem für Abwasserleitungen üblichen Leitungsdurchmesser für eine ausreichende Rohrlänge zu sorgen, was bei einem geraden Rohrleitungsverlauf zu Schwierigkeiten führen kann. Die Rohrleitung 6 kann daher gegebenenfalls auch in Windungen verlegt werden, ohne die Selbstreinigung gefährdende Toträume zu schaffen. Außerdem ist es bei einer größeren Abwassermenge möglich, die Rohrleitung 6 in parallele Stränge aufzuteilen.

Obwohl der Einsatz des Wärmetauschers 11 als Verdampfer der Wärmepumpe 13 besonders einfache Konstruktionsverhältnisse mit sich bringt, kann die fühlbare Abwärme der Abwässer über den Wärmetauscher 11 auch mittelbar an den Kältemittelkreis der Wärmepumpe 13 abgegeben werden, wenn zwischen dem Kältemittelkreis der Wärmepumpe 13 und dem Wärmetauscher 11 ein zusätzlicher Wärmetauscher vorgesehen wird, über den die vom Abwasser aufgenommene Abwärme auf den Kältemittelkreis der Wärmepumpe 13 übertragen wird.

## Patentansprüche

1. Vorrichtung zur Nutzung der Abwärme insbesondere häuslicher Abwässer mit einem Sammelbehälter (1) für die Abwässer, der über eine bodenseitig angeschlossene, abflussseitig durch ein Steuerventil (7) verschließbare Rohrleitung (6) mit einer Abwasserableitung (4) verbunden ist, und mit einem mit dem Abwasser aus dem Sammelbehälter (1) beaufschlagbaren, aus der wenigstens mit einer Rohrschlange (12) vorzugsweise für das Kältemittel einer Wärmepumpe (13) umwundenen Rohrleitung (6) gebildeten Wärmetauscher (11), **dadurch gekennzeichnet, dass** das Steuerventil (7) zur chargenweisen Erwärmung des die Rohrschlange (12) durchströmenden Kältemittels in Abhängigkeit von der Abwassertemperatur in der Rohrleitung (6) betätigbar ist.

2. Vorrichtung nach Anspruch 1, **dadurch gekennzeichnet, dass** die Rohrleitung (6) unter einem Gefälle verlegt ist.

3. Vorrichtung nach Anspruch 1 oder 2, **dadurch gekennzeichnet, dass** eine an einen Temperaturfühler (9) für das Abwasser in der Rohrleitung (6) angeschlossene Steuereinrichtung (8) vorgesehen ist, die einerseits das Steuerventil (7) der Rohrleitung (6) und anderseits einen Verdichter (14) für den Kältemittelkreis der Wärmepumpe (13) ansteuert.

4. Vorrichtung nach Anspruch 3, **dadurch gekennzeichnet, dass** die Steuereinrichtung mit einem Füllstandsgeber (10) des Sammelbehälters (1) verbunden ist.
